# EUROPEAN PATENT APPLICATION

(11) **EP 4 599 943 A1**
(43) Date of publication of application: **13.08.2025**
(21) Application number: 24156548.0
(22) Date of filing: 08.02.2024
(51) Int. Cl.: B05C 5/02, B05C 9/06, H01M 4/04

(54) **SYSTEM FOR COATING AN WEB-TYPE ELECTRODE SUBSTRATE AND METHOD OF MANUFACTURING AN ELECTRODE WEB**

(71) Applicant: LG Energy Solution, Ltd., Seoul 07335 (KR)
(72) Inventor: JUNG, Jae Sun, 34122 Daejeon (KR); MOON, Jun Ho, 34122 Daejeon (KR); LEE, Jae Keun, 34122 Daejeon (KR); KANG, Min Kyu, 34122 Daejeon (KR); LEE, Gil Seon, 34122 Daejeon (KR)
(74) Representative: Goddar, Heinz J.

(57) **Abstract**

A system (210, 310) configured for coating an web-type electrode substrate (1) travelling in a process direction (P) and having a web width extending in a lateral direction (L) perpendicular to the process direction (P) to make an electrode web material comprises a first die coater (230, 330) comprising a first opening (231, 331) for depositing a battery material onto the web-type electrode substrate, wherein the first opening (231, 331) defines a first opening width (w) extending in the lateral direction (L), a second die coater (240, 340, 440) comprising at least one second opening (241, 341, 342, 441, 442) defining a second opening width (a, b) extending in the lateral direction (L), wherein the second opening width (a, b) is smaller than the first opening width (w), and wherein the second opening (241, 341, 342, 441, 442) is offset from the first opening (231, 331) downstream in the process direction (P) and offset in the lateral direction (L), such that the second opening (241, 341, 342, 441, 442) includes a free portion arranged outward from the first opening (231, 331) in the lateral direction (L).

## Description

### TECHNICAL FIELD

The present disclosure relates to a system for coating a web-type electrode substrate, to a method for manufacturing an electrode web and to corresponding electrodes and batteries.

### BACKGROUND

In modern society, as portable devices such mobile phones, notebook computers, camcorders and digital cameras have become popular, the development of battery technology is of great significance. In addition, chargeable/dischargeable secondary batteries have become indispensable power sources for electric vehicles (EV), hybrid electric vehicles (HEV), plug-in hybrid electric vehicles (P-HEV) and the like, in the attempt to reduce air pollution, decrease carbon dioxide emissions, and the like, caused by existing combustion engine vehicles using fossil fuel. Therefore, there is a growing need for improvements of secondary batteries.

Currently commercialized secondary batteries include nickel cadmium batteries, nickel hydrogen batteries, nickel zinc batteries, and lithium secondary batteries. Among these, the lithium secondary batteries have come into the spotlight because of various beneficial aspects, for example, they hardly exhibit memory effects compared to nickel-based secondary batteries and thus may be liberally charged and discharged, and they display very low self-discharge rates and high energy density.

Secondary batteries may be classified based on the shape of battery case into cylindrical batteries having an electrode assembly mounted in a cylindrical metal can, prismatic batteries having an electrode assembly mounted in a prismatic metal can, and pouch-type batteries. The pouch-type secondary batteries generally accommodate an electrode assembly having a structure in which electrodes and separators are alternately arranged within a pouch-shaped case made of a laminated aluminum sheet.

Further, the secondary battery may be classified based on the structure in which a cathode and an anode are stacked with a separator being interposed between the cathode and the anode. Typically, there may be a jelly-roll (wound) type structure in which a long sheet type cathode and a long sheet type anode are wound with a separator being interposed between the cathode and the anode, or a stacked (laminated) type structure in which pluralities of cathodes and anodes, cut into predetermined unit sizes, are sequentially stacked with separators being interposed between the cathodes and the anodes, or the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly.

The electrodes (preferably electrode sheets), that is, the cathode and the anode, are typically formed in a process in which web-type electrode substrate, for example a metal foil web material, is processed into an electrode web by coating the web-type electrode substrate with an active material layer and subsequently separating individual electrode units from the coated web.

In order to produce an electrode for a battery by coating the web-type electrode substrate, die coater systems are commonly used. Some die coater systems are described in KR 10-2022-0027024 A, KR 10-2022-0094459 A, KR 10-1750599 B1, KR 10 2020 037662 A, or KR 10-2020-037662 A. In these die coater systems, a die block assembly has an opening facing an web-type electrode substrate guided by a roll in front of the die block assembly. The axis of rotation of the roll is aligned with the opening of the die block assembly. Active electrode material is coated onto the web-type electrode substrate by providing an active material slurry through the die block assembly. The active material slurry may differ from the active material in particular in that the slurry additionally contains at least one solvent or the like. The die block assembly may comprise two or more die blocks rigidly coupled to one another. The channel may be formed as a slot between two die blocks engaging one another. For supplying active material slurry, at least one of the die blocks in the assembly is provided with a manifold connected on one side to a supply line and on another side to a channel extending to the opening.

For achieving maximum output, it is desired to coat the web-type electrode substrate with an active material layer of constant thickness, width, and height. Thickness profiles and sloping angles at lateral edges of the active material layer on the electrode substrate are considered particularly relevant.

In order to control the amount of the active material slurry and to coat the active material layer uniformly on the web-type electrode substrate, shims in various shapes are typically installed between the two die blocks. The shims are positioned for controlling quantity and thickness profiles of the active material slurry discharged from the slot between the two die blocks. A variety of different designs of such shims are employed to achieve desired thickness profiles of the active material layer.

However, conventional die block assemblies are known to produce coatings with lateral side or edge portions of irregular shape, or otherwise undesired geometry. Especially in case of deviating processing conditions or varying environmental influences on the die or slurry, conventional assemblies have proven inadequate to ascertain a continuous quality of the electrode coating.

In such a case, the resulting electrode might be of subpar quality, which might cause a battery to have a reduced lifespan, capacity, voltage, energy density, power level, or the like.

### DETAILED DESCRIPTION OF THE INVENTION

### Technical Problem

It is an object of the present disclosure to overcome the disadvantages of the prior art, in particular to provide a system for coating an web-type electrode substrate with battery materials, a method for manufacturing an electrode as well as electrode which allows for a fast, reliable and/or efficient production, preferably of the highest quality.

However, the problem to be solved by the embodiments of the present disclosure is not limited to the above-described problems, and can be variously expanded within the scope of the technical idea included in the present disclosure.

### Technical Solution

One or more problems known from the prior art are solved by the subject-matter according to the independent claims. Particular embodiments are given by the features of the dependent claims.

Some of the features and operations of a die coater and method for operating a die coater and/or foil described above may also be employed in the claimed subject-matter, and may not be repeated hereinafter, for the sake of conciseness of the description.

Accordingly, a system for coating an web-type electrode substrate and a method for manufacturing an electrode are provided.

The system is configured for coating the web-type electrode substrate which travels in a process direction to manufacture an electrode web material. The coating the web-type electrode substrate may refer to a process in which battery materials are discharged from the system onto the web-type electrode substrate to form a battery material layer. Detailed aspects of the coating process are hereinafter described in the following section of the manufacturing method of an electrode.

According to the present disclosure, the system comprises a first die coater which comprises a first opening for depositing a (first) battery material onto the web-type electrode substrate. The first opening defines a width (first opening width) extending in the lateral direction. It may be preferred that the first die coater comprises at least two, at least three, at least four or more first openings.

The system according to the present disclosure further comprise a second die coater. The second die coater may be configured to deposit the (first) battery material onto the web-type electrode substrate. The second die coater may be arranged separately from the first die coater. For example, the second die coater may be positioned on at least one lateral edge side of the first die coater. Preferably, a pair of second die coaters may be positioned on two lateral edge sides of the first die coater. In particular for a system comprising multiple first openings in one or more first die coaters, pairs of second die coaters may be positioned on two lateral edges of a respective first opening. Accordingly, the active material layer formed on the lateral edge(s) of the web-type electrode substrate extending in the lateral direction can be precisely and individually adjusted.

The second die coater comprises at least one second opening (second discharge port) to discharge the (first) battery material. The second opening may be configured to deposit the (first) battery material onto the web-type electrode substrate. The second opening defines a second opening width which extends in the lateral direction. The second opening width is smaller than the first opening width.

In the system according to the present disclosure, the second opening is offset from the first opening downstream in the process direction. Additionally, the second opening is offset from the first opening in the lateral direction such that the second opening comprises a free portion arranged outward from the first opening in the lateral direction. The free portion of the second opening is arranged to deposit the (first) battery material, in particular onto the web-type electrode substrate. The free portion defines a free width extending in the lateral direction.

By implementing a first die coater and a second die coater, it becomes possible to control pressure differences between a center portion and lateral side portions (lateral edge portions) of the active material slurry to be deposited onto the electrode substrate. While the slurry deposited through the first die coater can be provided in a large volume flow, the slurry deposited through the second die coater laterally adjacent to the first die coater can be fine-tuned to determine the volume flow discharged in the edge region of the coating. By controlling the active material or other battery material deposited onto an electrode substrate through the second die coater, the height and shape of the active material coating in the lateral edge sections of the coating can be adjusted in a precise manner.

In particular the use of a second die coater having a second opening with a free portion arranged laterally outward of the first opening allows to finely adjust the lateral edge portions of the coated active material layer. By adjusting the volume flow through the second opening and the free portion thereof, the coating process can by adjusted quickly in response to changing manufacturing conditions or other factors. The free portion allows to control the coating of the lateral edge portion independently and to adjust the size and shape thereof precisely.

### WEB-TYPE ELECTRODE SUBSTRATE

The web-type electrode substrate may comprise or consist of an electrically conductive material. In particular, the web-type electrode substrate may consist of or comprise a metal, or metal alloy, comprising or consisting for example of aluminum or copper.

The web-type electrode substrate may have a web length, which may be defined as a dimension of the web-type electrode substrate in the process direction. The web-type electrode substrate may have a web width, which may be defined as a dimension of the web-type electrode substrate that expands in a lateral direction perpendicular to the process direction. The web-type electrode substrate may have a web thickness, which may be defined as a dimension of the web-type electrode substrate that expands in a thickness direction perpendicular to the process direction and the lateral direction.

The electrode web material manufactured by coating the web-type electrode substrate with a battery material may be processed further to serve as an electrode unit or the like, particular as a positive electrode unit or as a negative electrode unit. In particular, an electrode unit produced by the above-mentioned system hereinbelow may be formed into in a jelly-roll type electrode assembly, a stacked type electrode assembly, or a stacked/folded type electrode assembly.

The term "web material" shall be understood as a generic term to relate to a web-type material such as a film, sheet, foil, net, porous material, such as sieve, foam, and non-woven fabric, or the like. A web material has a web length dimension substantially larger than a web width dimension, wherein the latter is substantially larger than a web thickness dimension. For example, the web thickness dimension of the web-type electrode substrate to be processed may be configured in a range between 1 µm and 100 µm, preferably between 3 µm and 30 µm, more preferably between 5 µm and 15 µm. For example, the web width dimension of the web-type electrode substrate to be processed may be configured in a range between 1 mm and 5000 mm, preferably between 10 mm and 1000 mm, more preferably between 50 mm and 500 mm. For example, the web length dimension of the web-type electrode substrate to be processed may be configured in a range between 10 m and 100 km, preferably between 100 m and 50 km, more preferably between 500 m and 25 km. At a typical rate of web material movement during processing, particularly during the coating step, may be in the order of magnitude of 100 m/Min.

### FIRST DIE COATER

The first opening may have a first cross sectional area configured to face the web-type electrode substrate. The first opening may have a generally rectangular cross section. The first opening preferably extends in the process direction and in the lateral direction. The extension of the first opening in the lateral direction is preferably the first dimension of the first opening. It shall be clear that the extension of the first opening in the lateral direction defines the width of the first opening (first opening width). The extension of the first opening in the process direction can be considered as the length of the first opening. The length of the first opening is preferably smaller than its width. The lateral extension or first extension of the first opening is preferably larger than, in particular at least five times as large as, preferably at least 10 times as large as, more preferably at least 100 times as large as the extension of the first opening in the second direction. The first opening may have a slot like shape. A rectangular opening defined by the first opening is substantially wider than it is long. The first (lateral) extension or width of the first opening is preferably in the magnitude of at least 10 mm, in particular at least 100 mm or at least 200 mm, preferably at least 400 mm, and no more than 2000 mm, in particular no more than 1000 mm. The first opening preferably defines a first opening width which extends in the lateral direction. The first opening width is preferably in a range between, for example, 50 mm and 800 mm. Preferably, the first opening width may be configured in a range between 50 mm and 600 mm. More preferably, the first opening width may be equal to or smaller than 505 mm. The second extension (in the processing direction) or length of the first opening is preferably in the magnitude of less than 1 mm, preferably less than 100 µm, and more than 1 µm, preferably more than 10 µm.

The first opening (first discharge port) defines a discharge direction. The discharge direction may be designated as a third direction. The discharge direction preferably corresponds to the thickness direction. The discharge direction corresponds to the direction in which the active material slurry moves through the first opening when exiting the first die coater. The discharge direction may correspond to a direction perpendicular to the plane defined by the first and second directions in which the cross-section of the first opening extends. In other words, the discharge direction is preferably perpendicular to the plane in which the cross-sectional area of the first opening is oriented.

The first die coater may be configured to be arranged such that the substrate or is positioned in front of the first opening with a constant coating distance. The coating distance preferably extends between the first opening and the foil in the discharge direction or third direction. The coating distance between the substrate and the first opening may be configured to correspond to a desired active material layer thickness. With respect to the lateral direction, the substrate may be arranged in parallel with the first opening. The parallel arrangement of the substrate (foil) with respect to the first opening in the lateral direction may be achieved by guiding the substrate in front of the first opening, for example over a roll of constant diameter having an axis of rotation arranged in the lateral direction.

### SECOND DIE COATER

The second opening may have a second cross sectional area configured to face the web-type electrode substrate. The second opening may have a generally rectangular cross section. The second opening preferably extends in the process direction and in the lateral direction. The extension of the second opening in the lateral direction is preferably the first dimension of the second opening. It shall be clear that the extension of the second opening in the lateral direction defines the width of the second opening (second opening width). The extension of the second opening in the process direction can be considered as the length of the second opening. The length of the second opening is preferably smaller than its width. The lateral extension or first extension of the second opening is preferably larger than, in particular at least 1.5 times as large as, preferably at least two or five times as large as, more preferably at least 10 times as large as the extension of the second opening in the second direction. The second opening may have a slot like shape. A rectangular opening defined by the second opening is preferably at least as wide as it is long. The first (lateral) extension or width of the second opening is preferably in the magnitude of at least 0.2 mm, in particular at least 0.3 mm or at least 0.5 mm, preferably at least 1 mm, and no more than 30 mm, in particular no more than 15 mm, preferably no more than 10 mm, more preferably no more than 5 mm or no more than 2 mm. The second opening preferably defines a second opening width which extends in the lateral direction. The second opening width is preferably in a range between, for example, 0.5 mm and 50 mm. Preferably, the second opening width may be configured in a range between 1 mm and 25 mm. More preferably, the second opening width may be equal to or smaller than 15 mm, 10 mm or 5 mm. The second extension (in the processing direction) or length of the second opening is preferably in the magnitude of less than 1 mm, preferably less than 100 µm, and more than 1 µm, preferably more than 10 µm.

The second opening (second discharge port) defines a second discharge direction. The second discharge direction is preferably parallel to the discharge direction of the first opening. The discharge direction preferably corresponds to the thickness direction. The second discharge direction corresponds to the direction in which the active material slurry moves through the second opening when exiting the second die coater. The second discharge direction may correspond to a direction perpendicular to the plane defined by the first and second directions in which the cross-section of the second opening extends. In other words, the second discharge direction is preferably perpendicular to the plane in which the cross-sectional area of the second opening is oriented.

The second die coater may be configured to be arranged such that the substrate is positioned in front of the second opening with a constant second coating distance. The second coating distance preferably extends between the second opening and the substrate in the second discharge direction. The coating distance between the substrate and the second opening may be configured to correspond to a desired layer thickness. With respect to the lateral direction, the substrate may be arranged in parallel with the second opening.

### BATTERY MATERIAL

The (first) battery material discharged from the first opening of the first die coater may be an active electrode material (short: active material). For example, an electrode configured to act as an anode may be provided with an active material layer configured for receiving and/or storing, preferably releasably storing, ions. An active material, in particular of an anode, may include graphite as its first component. An electrode configured to act as a cathode may be equipped with an active material configured to release ions. The active material, in particular for a cathode, may comprise or consist of metal oxide, such as a lithium oxide. The active material may for example include or consist of LCO (LiCoOz), NCM (Li(NiCoMn)O₂), NCA (Li(NiCoAl)O₂), LMO (LiMn₂O) and/or LFP (LiFePO₄). The active material may include conductive additives, binder, filler and other components (active material mixture). An active cathode material may be configured to be replenishable. The process of releasing ions from the cathode active material and received of ions by the anode active material may be referred to as discharging. A process of releasing ions from an anode active material and replenishing the cathode active material with the ion may commonly be referred to as charging or recharging. The active materials used in the electrodes of a battery are considered essential for determining properties of a battery such as its capacity, voltage and memory effect.

A positive electrode active material is coated on a positive electrode unit and a negative electrode active material coated on a negative electrode unit may include any known active material in the technical field pertaining to the present disclosure without limitation.

In an example, the positive electrode active material may include an alkali metal compound represented by formula A[AₓM_{y}]O_{2+z} (A includes at least one of Li, Na or K; M includes at least one selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; the stoichiometric coefficients x, y and z are selected to keep the compound electrically neutral).

In another example, the positive electrode active material may be an alkali metal compound xLiM1O₂-(1-x)Li₂M2O₃ (M1 includes at least one element having an average trivalent oxidation state; M2 includes at least one element having an average tetravalent oxidation state; 0 ≤ x ≤ 1) disclosed by US 6,677,082 and US 6,680,143.

In still another example, the positive electrode active material may be lithium metal phosphate represented by formula LiₐM1ₓFe₁₋ₓM2_{y}P_{1-y}M3_{z}O_{4-z} (M1 includes at least one selected from Ti, Si, Mn, Co, Fe, V, Cr, Mo, Ni, Nd, Al, Mg and Al; M2 includes at least one selected from Ti, Si, Mn, Co, Fe, V, Cr, Mo, Ni, Nd, Al, Mg, Al, As, Sb, Si, Ge, V and S; M3 includes a halogen group element optionally including F; 0 < a ≤ 2, 0 ≤ x ≤ 1, 0 ≤ y < 1, 0 ≤ z < 1; the stoichiometric coefficients a, x, y and z are selected to keep the compound electrically neutral), or Li₃M2(PO₄)₃ [M includes at least one selected from Ti, Si, Mn, Fe, Co, V, Cr, Mo, Ni, Al, Mg and AI].

In an example, the negative electrode active material may include a carbon material, lithium metal or a lithium metal compound, silicon or a silicon compound, tin or a tin compound. Metal oxide having the potential of less than 2V such as TiOz and SnOz may be used as the negative electrode active material. The carbon material may include low crystalline carbon and high crystalline carbon.

In some embodiments, the second die coater may be configured to be individually movable in the thickness direction. By moving the second die coater in the thickness direction, the amount of the battery material deposited onto the web-type electrode substrate may be controlled. The second die coater may be configured such that the second opening may be displaced from a resting position by at least 1 µm, in particular at least 3 µm, more particularly at least 5 µm, and/or no more than 50 µm, in particular no more than 25 µm more particularly no more than 10 µm towards an/or away from the web-type electrode substrate. For example, when the second die coater is moved in the thickness direction away from or close to the web-type electrode substrate, the amount of the deposited battery material may increase or reduce. Accordingly, lateral edges of the active material layer can be precisely and individually controlled. Consequently, the efficiency, performance and lifespan of the battery are increased.

Additionally or alternatively, the first die coater may be configured to be movable in the thickness direction. The first die coater may be configured such that the first opening may be displaced from a resting position towards an/or away from the web-type electrode substrate. By moving the first die coater in the thickness direction, the amount of the (first) battery material deposited onto the web-type electrode substrate per unit area may be controlled. For example, when the first die coater in the thickness direction is moved away from or close to the web-type electrode substrate, the amount of the deposited battery material per unit area may increase or reduce. Accordingly, the overall thickness of the active material layer formed on the web-type electrode substrate may be increased or reduced.

According to some embodiments, the second opening width may be equal to or smaller than 10% of the first opening width. Preferably, the second opening width may be smaller than 5% of the first opening width. More preferably, the second opening width may be smaller than 2.5% or 1% of the first opening width. For example, the second opening width may be equal to or smaller than 20 mm or 15 mm. Preferably, the second opening width may be equal to or smaller than 10 mm. More preferably, the second opening width may be equal to or smaller than 5 mm.

In some embodiments of a system according to the present disclosure, the second opening may comprise an overlapping portion that at least partially overlaps the first opening in the lateral direction. The overlapping portion may define an overlapping width extending in the lateral direction. The overlapping width may be smaller than the free width. For example, the free width may be equal to or greater than 50% of the second opening width. Preferably, the free width may be equal to or greater than 60% of the second opening width. More preferably, the free width may be equal to or greater than 70% of the second opening width.

The second die coater may further comprise a third opening (third discharge port). The third opening may be configured to discharge a second battery material. In an example, the second battery material may be an active material. In another example, the third opening may be a dielectric material. For example, the dielectric material may be PVDF, CMC, SBR or the like. However, the dielectric material is not limited thereto. The third opening may be positioned in a parallel position in the lateral direction to the second opening, in which the third opening is offset further from the first opening in the process direction than the second opening.

The third opening may be offset from the first opening by the same lateral offset as the second opening. If the second opening and the third opening are equally offset from the first opening by a same distance, it is preferable to apply for manufacturing a negative electrode. For example, the second opening and the third opening may both discharge an active material. In this case, the second battery material discharged from the third opening may be an active material and may have, for example, different adhesion than the active material discharged from the second opening. The adhesion of the active material may generally be increased or decreased by controlling an amount and/or a type of binder mixed in the active material. Consequently, a particularly stable structure of an electrode web can be achieved, and a precise thickness profile can be obtained even at the lateral edges of the electrode web. Thereby, capacity of batteries can be maximized.

Optionally, the third opening is offset further outward from the first opening in the lateral direction than the second opening. More specifically, the third opening may be positioned adjacent to the second opening. The lateral offset of the third opening may correspond to the laterally outer edge of the second opening. Preferably, the third opening may at least partially overlap the second opening in the lateral direction. The third opening may overlap the second opening by, for example, no more than 3 mm, preferably no more than 2 mm, in the lateral direction. More preferably, the third opening may overlap the second opening by no more than 1 mm in the lateral direction. If the third opening is offset further outward from the first opening in the lateral direction than the second opening, it is more preferable to apply for manufacturing a positive electrode. In this case, the second battery material may comprise or consist of a dielectric material.

The present disclosure furthermore relates to a method for manufacturing an electrode web. It may be preferred that the method for manufacturing an electrode web uses the above-mentioned system for coating an web-type electrode substrate. The above-mentioned system for coating an web-type electrode substrate is preferably configured to be operated in accordance with the method for manufacturing an electrode web. The method for manufacturing an electrode web may comprise several steps.

The method of the present disclosure comprises a step of providing an web-type electrode substrate. The web-type electrode substrate may define a web width extending in a lateral direction. The lateral direction may be parallel to a planar surface of the web-type electrode substrate and perpendicular to a process direction, in which the web-type electrode substrate is moved. The web width may be configured in a range, for example, between 50 mm and 800 mm. Preferably, the web width may be configured in a range between 50 mm and 650 mm. More preferably, the web width may be configured to be equal or smaller than 550 mm.

The method according to the present disclosure further comprises a step of moving the web-type electrode substrate in the process direction. Herein, moving the web-type electrode substrate may refer to a continuous movement, for example, conveying, transporting and/or forwarding the web-type electrode substrate from one position to another position. In order to move the web-type electrode substrate, a transport device may be configured. The transport device may, for example, include a conveyor, e.g. a belt-type conveyor, a roller-type conveyor, a chain-type conveyor and/or a combination thereof.

According to the present disclosure, the method further comprises a step of depositing an amount of a (first) battery material onto a first surface area on a first side of the web-type electrode substrate to form a first deposition portion. The (first) battery material may be, for example, an active material. The web-type electrode substrate, which is, for example, a foil or sheet, comprises two planar surfaces extending in the lateral direction and in the process direction. The first side of the web-type electrode substrate may be a side, on which one of the two planar surfaces faces towards the first opening of the system. The web-type electrode substrate may further comprise the first surface area on the first side. The first surface area may be defined as an area that includes a central point of the one planar surface being on the first side of the web-type electrode substrate and continuously extends in the process direction and in the lateral direction. This central point may be defined as a point on the first side where two diagonals of the one surface intersect. The first surface area may be also defined as an area where the battery material discharged from the first opening of the above-described coating system is deposited. The first surface area may be formed to comprise a first width in the lateral direction. For example, the first width may be equal to or smaller than the web width of the web-type electrode substrate. Preferably, the first width may be equal to or smaller than 550 mm or 510 mm. More preferably, the first width may be equal to or smaller than 505 mm. In an example, the first width may be 504 mm. The first deposition portion may be a portion of a (first) battery material deposition. The first deposition portion is formed by depositing the amount of the (first) battery material onto the first surface area on the first side of the web-type electrode substrate. The amount of the (first) battery material may be an amount discharged from the first opening of the coating system. In other words, the first deposition portion may be formed by depositing the (first) battery material discharged from the first opening of the coating system. The first deposition portion is formed to comprise a contact surface in contact with the web-type electrode substrate and a top surface opposite the contact surface.

In the electrode manufacturing method of the present disclosure, the first deposition portion is formed so as to comprise a sloping edge portion on at least one lateral edge of the deposition which slopes down from the top surface to the web-type electrode substrate. The sloping edge portion comprises a slope width extending in the lateral direction. The slope width is equal to or smaller than 10%, 5% or preferably 1% of the first width.

The electrode manufacturing method of the present disclosure further comprises a step of depositing an additional amount of the (first) battery material onto a second surface area on the first side of the web-type electrode substrate. The second surface area may be formed as an area offset with respect to the first surface area in the lateral direction. The second surface area may be formed laterally adjacent to the first surface area and extend in the process direction. In the manufacturing method of the present disclosure, the step of depositing the additional amount of the (first) battery material onto the second surface area on the first side of the web-type electrode substrate offset with respect to the first surface area in the lateral direction is also performed to form a cover deposition portion in the first surface area extending at least partially over the first deposition portion. The cover deposition portion is formed on the top surface of part of first deposition portion. More specifically, the cover deposition portion may be formed on at least one lateral edge part of the top surface of the first deposition portion. In an example, the cover deposition portion may be formed completely to cover the sloping edge portion of the first deposition portion. In another example, the cover deposition portion may be formed to at least partially cover the sloping edge portion of the first deposition portion. The second deposition portion may define a thickness in a thickness direction perpendicular to the process direction and the lateral direction. For example, the thickness of the second deposition portion may be equal to or thicker than a thickness or the first deposition portion. It may be preferred to use the second coater to form the second deposition portion. By forming the second deposition portion, the active material layer formed on the lateral edge(s) of the web-type electrode substrate extending in the lateral direction can be precisely adjusted. The deposition of the second deposition portion laterally adjacent to the first deposition portion can be fine-tuned to determine the volume flow discharged in the edge region of the coating. By controlling the active material or other battery material deposited onto the electrode substrate in the second deposition portion at the edge of the first deposition portion, the height and shape of the active material coating in the lateral edge sections of the coating can be adjusted in a precise manner.

In preferred embodiments of the manufacturing method of the present disclosure, the second surface area may have a first width in the lateral direction. For example, the first width may be equal to or smaller than 10% of the first surface area. Preferably, the first width may be equal to or smaller than 5% of the first surface area. More preferably, the first width may be equal to or smaller than 1% of the first surface area. In an example, the first width may be configured in a range between 0.1 mm and 5 mm. Preferably, the first width may be configured in a range between 0.1 mm and 4 mm, o.1 mm and 3 mm, 0.1 mm and 2 mm, or more preferably 0.1 mm and 1 mm.

Due to the depositing of the (first) battery material onto offset position of the web-type electrode substrate, a second deposition portion may be formed directly on the web-type electrode substrate. The second deposition portion may be a portion of the (first) battery material deposition that is formed on the second surface area laterally adjacent to the first surface area. The second deposition portion may have a second width in the lateral direction. The second width may be formed to be equal to or greater than the first width.

The second deposition portion may be formed to have a contact surface in contact with the web-type electrode substrate and a top surface opposite the contact surface. Preferably, the second deposition portion may be formed to have a sloping edge portion. The sloping edge portion of the second deposition portion may be formed on at least one lateral edge which slopes down from the top surface to the web-type electrode substrate. The sloping edge portion of the second deposition portion may define a slope width extending in the lateral direction. The slope width may be, for example, in a range between 0.1 mm and 4 mm, 0.1 mm and 3 mm, 0.1 mm and 2 mm or preferably 0.1 mm and 1 mm.

The cover deposition portion may be formed equal to or smaller than 50% of the second deposition portion, in other words, the second deposition portion is equal to or larger than 50% of the cover deposition portion.

The second deposition portion and the cover deposition portion may be formed by depositing the additional amount of the (first) battery material. The additional amount of the (first) battery material may be discharged from the second opening of the coating system. The additional amount may be less than the amount of the (first) battery material deposited by the first opening of the coating system.

Additionally, the method may further comprise a step of depositing a second battery material onto a third surface area on the first side of the web-type electrode substrate. The third surface area may be an area offset with respect to the second surface area, opposite to the first surface area. The third surface area may be laterally adjacent to the second surface area and extent in the process direction. Due to the additional depositing the second battery material onto offset position of the web-type electrode substrate, the second battery material may be deposited directly onto the web-type electrode substrate. The second battery material may be deposited laterally adjacent to the second deposition portion. Further, the second battery material may be deposited at least partially over the second surface area. For example, the second battery material may be deposited at least partially on a top surface of the second deposition portion. The second battery material may be a material discharged from the third opening of the coating system.

In an example, the second battery material may comprise or consist of the first battery material. In another example, the second battery material may differ from the first battery material. For example, the second battery material may comprise or consist of a dielectric material.

The electrode web manufactured by the method described hereinabove, preferably an cathode web or anode web, may be processed to be cut into electrode sheets (electrode units), that is cathode sheets and/or anode sheets, preferably of predetermined unit sizes. Cathode and/or anode sheets, which preferably were produced in the electrode manufacturing method as described hereinabove, are then sequentially stacked with separators being interposed between the cathode sheets and the anode sheets. Depending on a desired battery type, e.g. pouch type or jelly-roll type etc., the stacked electrode sheets may be further wound or folded to achieve a desired electrode configuration. The wound or folded electrode sheets may be inserted into an appropriate battery container according to the battery type, e.g. a pouch, can, or any other suitable container.

The present disclosure further relates to an electrode (preferably electrode web or electrode sheets), in particular for a secondary battery. The electrode may be produced according to the methods and/or using the system described hereinabove.

The electrode comprises an electrode substrate. The electrode substrate may be a web-type material (short: web material) such as a film, sheet or foil. The electrode substrate may comprise or consist of an electrically conductive material. In particular, the electrode substrate consists of or comprise a metal, or metal alloy, comprising or consisting for example of aluminum or copper.

The electrode according to the present disclosure comprises a battery material deposition on the electrode substrate. The battery material deposition comprises a battery material formed on the electrode substrate. The battery material may be an active material. The battery material deposition may define a width in the lateral direction. The width of the battery material deposition may be configured in a range between 50 mm and 1000 mm, 50 mm and 800 mm, 50 mm and 600 mm, or 50 mm and 500 mm. The battery material deposition may define a thickness in the thickness direction. The thickness of the battery material deposition may be configured in a range between 20µm and 250µm, 20µm and 200µm, 20µm and 150µm, or 20µm and 100µm. The battery material deposition comprises a contact surface in contact with the electrode substrate and a top surface opposite the contact surface.

According to the present disclosure, the battery material deposition further comprises a sloping edge portion on at least one lateral edge of the deposition. The sloping edge portion is a portion sloping down from the top surface to the electrode substrate. The sloping edge portion defines a slope width extending in the lateral direction. The slope width according to the present disclosure is equal to or smaller than 1% of the width of the battery material deposition. Additionally, the slope width may in some embodiments be at least 0.01 %, in particular at least 0.1 % of the width of the battery material deposition. The sloping edge portion may extend from the one lateral edge in the lateral direction toward the other lateral edge in a range between 0.1 mm and 8 mm, 0.1 mm and 6 mm, 0.1 mm and 5 mm, 0.1 mm and 4 mm or 0.1 mm and 3 mm. Preferably, the sloping edge portion may extend from the one lateral edge in the lateral direction toward the other lateral edge in a range between 0.1 mm and 2 mm, more preferably, 0.1 mm and 1 mm.

Additionally, the electrode may comprise a second material deposition on the electrode substrate. The second material deposition may be a layer comprising a second material, for example, a dielectric material. The second material deposition may be formed on the electrode substrate, adjacent to the lateral edge of the battery material deposition.

Additionally or alternatively, the second material deposition may cover the top surface of the battery material deposition partially. For example, the second material deposition may be formed at least one lateral edge or both opposite edges of the top surface of the battery material deposition. The electrode comprising the second material deposition may preferably be a positive electrode.

The present disclosure further refers to a battery comprising at least one electrode disclosed hereinabove

### Advantageous Effects

According to the embodiments, an active material coating of significantly improved shape, particularly at the lateral edge sections of the coating, can be coated onto a substrate such as a foil for forming an electrode.

The effects of the present disclosure are not limited to the effects mentioned above and additional other effects not described above will be clearly understood from the description of the appended claims by those skilled in the art.

### BRIEF DESCRIPTION OF THE DRAWINGS

- Fig. 1: is a machine performing a method of processing metal foil web material into an electrode web;
- Fig. 2A: is a schematic illustration of a conventional die coater;
- Fig. 2B: is a schematic illustration of a coating process using the die coater of Fig. 2A;
- Fig. 2C: is a schematic cross section of an electrode made with the die coater of Fig. 2A;
- Fig. 3A: is a schematic illustration of a die coater system according to the present disclosure;
- Fig. 3B: is a schematic illustration of a coating process according to the present disclosure using the system of Fig. 3A;
- Fig. 3C: is a schematic cross section of an electrode according to the present disclosure made with the die coater of Fig. 3A;
- Fig. 4A: is a schematic illustration of another die coater system according to the present disclosure;
- Fig. 4B: is a schematic illustration of a second die coater for the die coater system of Fig. 4A; and
- Fig. 5: is a schematic illustration of another second die coater.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

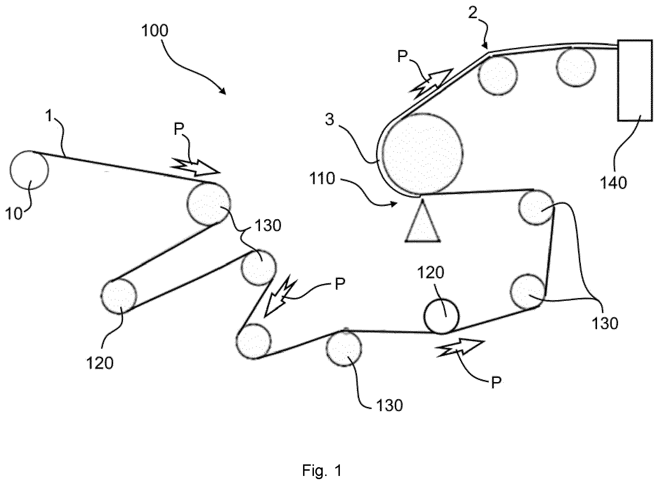

Fig. 1 shows an exemplary machine 100 which is configured to perform a process of processing an web-type electrode substrate realized as a metal foil web material 1 into an electrode web 2. The metal foil web material 1 typically has a thickness of only a few µm, a width of several dm and a length which may reach one or more km. The metal foil web material 1 is provided on a supply roll 10 and transported through the machine 100 in accordance with the process direction indicated with arrows.

Within the machine 100, the metal foil web material 1 travels along a multitude of deflection pulleys 130 and tensioning rollers 120. Some pulleys may be driven so as to exert a pulling force onto the metal foil web material 1 while some may idle. Tensioning rollers 120 are configured to press laterally against the traveling metal foil web material 1 so as to vary the travel path in order to allow for slight inconsistencies in the traveling velocity or elasticity. The metal foil web material 1 is run through a die coater system 110 which is configured and operated to supply the metal foil web material with an active material layer 3 as an example of a (first) battery material, thus forming an electrode web 2 according to the present disclosure. Downstream of the die coater system 110, an oven 140 is provided for curing the active material layer 3 to stabilize the electrode web 2.

In the schematic illustration of the machine 100 shown in Fig. 1, only one die coater system 110 and the subsequent oven 140 are shown, coating only a first side of the metal foil web material 1. It may be preferred that the metal foil web material 1 is afterwards fed through a further die coater and subsequent second oven for coating the opposite, second side of the metal foil web material so as to produce an electrode web supplied with an active material layer on both sides of the metal foil web material (not shown). Downstream of the oven or ovens, one or more separation devices may be provided for cutting individual sheets from the electrode web 2 (not shown). The separation devices may be operated to produce individual electrode sheets to be used in batteries.

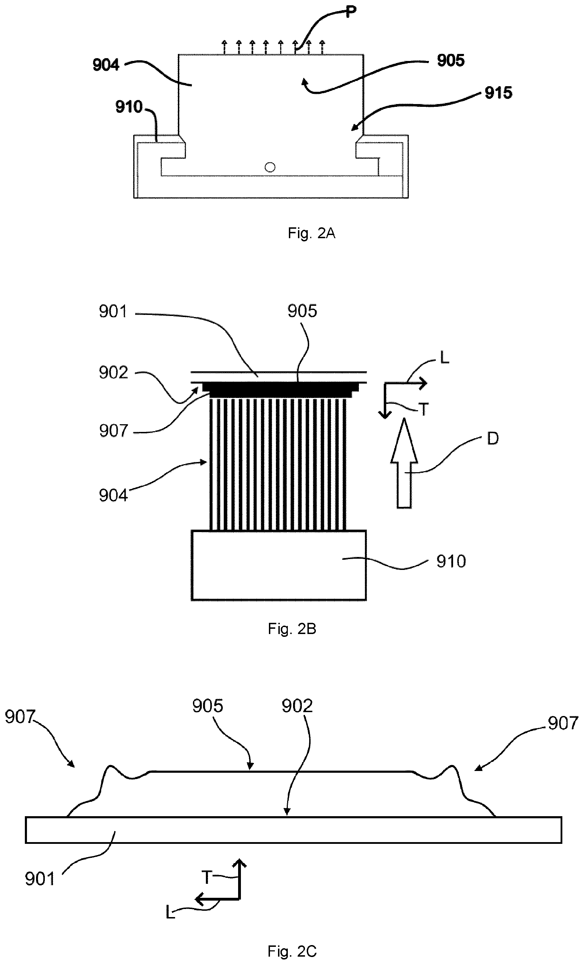

Fig. 2A shows a schematic illustration of a conventional die coater 913. Fig. 2B illustrates a schematic coating process using the die coater 913 of Fig. 2A. For ease of legibility, the web-type electrode substrate is not shown in Fig. 2A. Fig. 2C shows a schematic cross section of an electrode made with the die coater 913 of Fig. 2A.

The die coater 913 has a slot-like discharge port 915 of rectangular shape through which the slurry 904 of battery material is ejected onto a first surface area 902 on a first side of the web-type electrode substrate 901 to a material deposition layer 905. The lateral edges portions 907 of the battery material deposition layer 905 are of irregular shape and undesired wavy geometry, as is shown in an exaggerated manner in Fig. 2C.

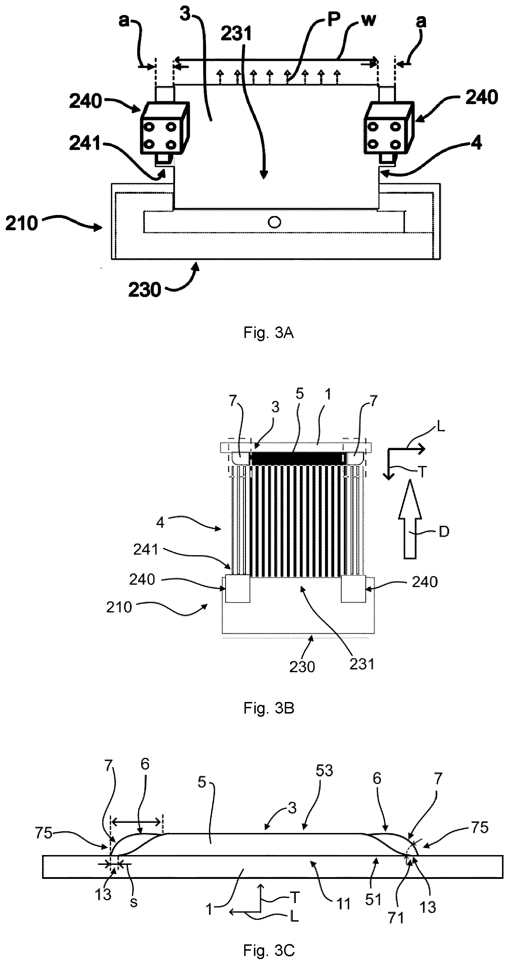

Fig. 3A is a schematic illustration of a die coater system 210 according to the present disclosure. The system 210 coats an web-type electrode substrate 1 travelling in a process direction P to make an electrode web material. The web-type electrode substrate 1 has a web width extending in a lateral direction L perpendicular to the process direction P.

The die coater system 210 includes a first die coater 230 comprising a first opening 231 for depositing a (first) battery material onto the electrode substrate web 1 material. The first opening 231 defines a first opening width w extending in the lateral direction L. The system includes two second die coaters 240. Each second die coater 240 comprises at least one second opening 241. The second openings 241 have a respective second opening width a extending in the lateral direction L. The second opening width a is substantially smaller than the first opening width w. Preferably, the second opening width a is equal to or smaller than 10% of the first opening width.

The second opening 241 is offset from the first opening 231 downstream in the process direction P. And the second opening 241 is offset from the first opening 231 in the lateral direction L, such that the second opening 241 includes a free portion arranged outward from the first opening in the lateral direction L. In some embodiments, the second opening 241 further comprises an overlapping portion that at least partially overlaps the first opening 231 in the lateral direction L, wherein the overlapping width is preferably smaller than the free width (not illustrated in detail).

The second die coater 240 may be configured to be movable in a thickness T direction perpendicular to the process direction and perpendicular to the lateral L direction. The first die coater 230 may be configured to be movable in a thickness T direction perpendicular to the process direction and perpendicular to the lateral L direction.

For the process coating the electrode substrate as shown in Fig. 3B to obtain an electrode with a cross section as shown in Fig. 3C, the web-type electrode substrate 1 is provided and moved in the process direction P perpendicular to the web width direction corresponding to the lateral direction L. In Fig. 3A, the discharge direction D in which the slurry is ejected coincides with the thickness direction T of the coating on the web-type electrode substrate 1. For coating the web-type electrode substrate 1, an amount of a (first) battery material is deposited onto a first surface area 11 on a first side of the web-type electrode substrate 1 to form a first deposition portion 5. Furthermore, additional amount of the battery material is deposited onto a second surface area 13 on the first side of the web-type electrode substrate 1 offset with respect to the first surface area 11 in the lateral direction L. The additional amount forms a second deposition portion 7 directly on the web-type electrode substrate 1 laterally adjacent to the first surface area 11. Thus, the additional amount creates a cover deposition portion 6 in the first surface area 11 which extends over part of the first deposition portion 5. The second surface area 13 has a width in the lateral direction equal to or smaller than 10% of the first surface area 11.

The electrode substrate shown in Fig. 3C comprises a battery material deposition portion 5 comprising a battery material formed on the electrode substrate 1. The battery material deposition 5 comprises a contact surface 51, 71 in contact with the first surface area 11 of the electrode substrate 1 and a top surface 53 opposite the contact surface 51. The battery material layer formed by the first deposition portion 5 and the second deposition portion 7 comprises a sloping edge portion 75 on its lateral edges which slopes down from the top surface 53 to the electrode substrate 1 defining a slope width s extending in the lateral direction L. The slope width s is equal to or smaller than 1% of a width of the battery material deposition portion.

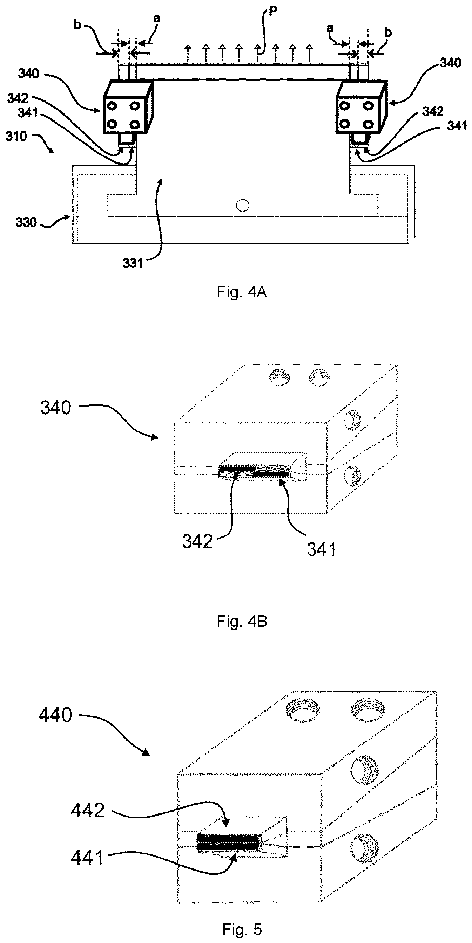

Fig. 4A is a schematic illustration of another die coater system 310. In the die coater system 310, like components are designated with like reference numerals increased by 100 in comparison to the aforementioned die coater system 210.

The die coater system 310 differs from the aforementioned die coater system 210 only in that, additionally, a second battery material is deposited onto a third surface area on the first side of the web-type electrode substrate 1 laterally adjacent to the second surface area 13 opposite to the first surface area 11. Thereby, the second battery material is at least partially deposited directly onto the web-type electrode substrate 1 and at least partially over the second surface area 11. The second battery material differs from the first battery material. The second material layer at least partially covers the top surface 53 of the battery material deposition. The battery material deposition is formed by the first deposition portion and the first and possibly third deposition portion. However, it may be preferred that the third deposition portion is formed with a dielectric material. The second deposition portion 7 has a width equal to or larger than 50% of the cover deposition portion 6.

Fig. 4B shows a schematic illustration of a second die coater 340 for the die coater system 310 of Fig. 4A. The second die coater 340 comprises a second opening 341 a third opening 342. The third opening 342 is offset from the first opening in the process direction P further than the second opening 341. The second openings 341 have a respective second opening width a extending in the lateral direction L. Also, the third openings 342 have a respective third opening width b extending in the lateral direction L.

The third opening 342 is positioned adjacent to the second opening 341, and at least partially overlaps the second opening 341 in the lateral direction. The third opening 342 can be used to deposit a second material deposition comprising a dielectric material. The second material layer is formed on the electrode substrate at the lateral edge.

Fig. 5 is a schematic illustration of another second die coater 440 which can be used in a system according to the present disclosure. The second die coater 440 comprises a second opening 441 a third opening 442. The third opening 442 is offset from the first opening in the process direction P than the second opening. In the lateral direction L, the second opening 441 a third opening 442 have the same position and width. The third opening 442 can be used to deposit a second material deposition comprising a dielectric material. The second material layer is formed on the electrode substrate at the lateral edge.

Although preferred embodiments of the present disclosure have been described in detail above, the scope of the present disclosure is not limited thereto, and various modifications and improvements made by those skilled in the art using the basic concepts of the present disclosure, which are defined in the appended claims, also falls within the scope of the present disclosure.

### [Reference Numerals]

- 1: web-type electrode substrate
- 2: electrode web
- 3: active material layer
- 4: slurry
- 5: first deposition portion
- 6: cover deposition portion
- 7: lateral edge portions
- 10: supply roll
- 11: first surface area
- 13: second surface area
- 51, 71: contact portion
- 53: top portion
- 75: sloping edge portion
- 100: machine
- 110: die coater
- 120: tensioning rollers
- 130: deflection pulleys
- 140: oven
- 210: system
- 230: first die coater
- 231: first opening
- 240: second die coater
- 241: second opening
- 310: system
- 330: first die coater
- 331: first opening
- 340: second die coater
- 341: second opening
- 342: third opening
- 440: second die coater
- 441: second opening
- 442: third opening
- 901: web material
- 902: surface area
- 904: slurry
- 905: material deposition layer
- 907: lateral edge portions
- 910: die coater
- 915: discharge port
- a, b: second opening width
- s: slope width
- w: first opening width
- D: discharge direction
- L: lateral direction
- P: process direction
- T: thickness direction

## Claims

1. A system (210, 310) configured for coating an web-type electrode substrate (1) travelling in a process direction (P) and having a web width extending in a lateral direction (L) perpendicular to the process direction (P) to make an electrode web material comprising:
a first die coater (230, 330) comprising a first opening (231, 331) for depositing a battery material onto the web-type electrode substrate, wherein the first opening (231, 331) defines a first opening width (w) extending in the lateral direction (L);
a second die coater (240, 340, 440) comprising at least one second opening (241, 341, 342, 441, 442) defining a second opening width (a, b) extending in the lateral direction (L), wherein the second opening width (a, b) is smaller than the first opening width (w),
wherein the second opening (241, 341, 342, 441, 442) is offset from the first opening (231, 331) downstream in the process direction (P) and offset in the lateral direction (L), such that the second opening (241, 341, 342, 441, 442) includes a free portion arranged outward from the first opening (231, 331) in the lateral direction (L).

2. The system (210, 310) of claim 1,
wherein the first die coater (230, 330) and/or the second die coater (240, 340, 440) is configured to be movable in a thickness direction (T) perpendicular to the process direction (P) and perpendicular to the lateral direction (L).

3. The system (210, 310) according to claim 1 or 2,
wherein the second opening width (a, b) is equal to or smaller than 10% of the first opening width (w).

4. The system (210, 310) according to one of the preceding claims,
wherein the second opening (241, 341, 342, 441, 442) further comprises an overlapping portion that at least partially overlaps the first opening (231, 331) in the lateral direction (L), wherein the overlapping width is smaller than the free width.

5. The system (310) according to one of the preceding claims,
wherein the second die coater (240, 340, 440) further comprises a third opening (342, 442),
wherein the third opening (342, 442) is offset further from the first opening (231, 331) in the process direction (P) than the second opening (342, 442),
wherein the third opening (342, 442) is positioned adjacent to the second opening (341, 441), and at least partially overlaps the second opening (341, 441) in the lateral direction (L).

6. Electrode manufacturing method comprising the following steps:
(a) providing an web-type electrode substrate (1) defining a web width extending in a lateral direction (L);
(b) moving the web-type electrode substrate (1) in a process direction (P) perpendicular to the web width direction;
(c) depositing an amount of a first battery material onto a first surface area on a first side of the web-type electrode substrate (1) to form a first deposition portion (5);
(d) depositing an additional amount of the first battery material onto a second surface area on the first side of the web-type electrode substrate (1) offset with respect to the first surface area in the lateral direction (L) to form a second deposition portion directly on the web-type electrode substrate (1) laterally adjacent to the first surface area and to form a cover deposition portion (6) in the first surface area extending at least partially over the first deposition portion (5).

7. The electrode manufacturing method according to claim 6, wherein the second surface area has a width in the lateral direction (L) equal to or smaller than 10% of the first surface area.

8. The electrode manufacturing method according to claim 6 or 7,
wherein the second deposition portion is equal to or larger than 50% of the cover deposition portion (6).

9. The electrode manufacturing method according to one of the claims 6 to 8 further comprising:
(e) depositing, additionally, a second battery material onto a third surface area on the first side of the web-type electrode substrate (1) laterally adjacent to the second surface area opposite to the first surface area, such that the second battery material is at least partially deposited directly onto the web-type electrode substrate (1) and at least partially over the second surface area.

10. The electrode manufacturing method according to claim 9,
wherein the second battery material differs from the first battery material.

11. An electrode comprising:
an electrode substrate; and
a battery material deposition comprising a battery material formed on the electrode substrate,
wherein the battery material deposition comprises a contact surface in contact with the electrode substrate and a top surface opposite the contact surface,
wherein the battery material layer comprises a sloping edge portion on at least one lateral edge of the deposition which slopes down from the top surface to the electrode substrate defining a slope width (s) extending in the lateral direction (L),
wherein the slope width (s) is equal to or smaller than 1% of a width of the battery material deposition.

12. The electrode according to claim 11 further comprising:
a second material deposition comprising a dielectric material,
wherein the second material layer is formed on the electrode substrate and the lateral edge.

13. The electrode according to claim 11,
wherein the second material layer at least partially covers the top surface of the battery material deposition.

14. A battery comprising at least one electrode according to one of the claims 11 to 13 and/or manufactured using the method according to one of the claims 6 to 10.

## Amended claims

### Amended claims in accordance with Rule 137(2) EPC.

1. A system (210, 310) configured for coating an web-type electrode substrate (1) travelling in a process direction (P) and having a web width extending in a lateral direction (L) perpendicular to the process direction (P) to make an electrode web material comprising:
a first die coater (230, 330) comprising a first opening (231, 331) for depositing a first battery material onto the web-type electrode substrate, wherein the first opening (231, 331) defines a first opening width (w) extending in the lateral direction (L);
a second die coater (240, 340, 440) comprising at least one second opening (241, 341, 342, 441, 442) for depositing the first battery material onto the web-type electrode substrate, defining a second opening width (a, b) extending in the lateral direction (L),
wherein the second opening width (a, b) is smaller than the first opening width (w),
wherein the second opening (241, 341, 342, 441, 442) is offset from the first opening (231, 331) downstream in the process direction (P) and offset in the lateral direction (L), such that the second opening (241, 341, 342, 441, 442) includes a free portion arranged outward from the first opening (231, 331) in the lateral direction (L).

2. The system (210, 310) of claim 1,
wherein the first die coater (230, 330) and/or the second die coater (240, 340, 440) is configured to be movable in a thickness direction (T) perpendicular to the process direction (P) and perpendicular to the lateral direction (L).

3. The system (210, 310) according to claim 1 or 2,
wherein the second opening width (a, b) is equal to or smaller than 10% of the first opening width (w).

4. The system (210, 310) according to one of the preceding claims,
wherein the second opening (241, 341, 342, 441, 442) further comprises an overlapping portion that at least partially overlaps the first opening (231, 331) in the lateral direction (L), wherein the overlapping width is smaller than the free width.

5. The system (310) according to one of the preceding claims,
wherein the second die coater (240, 340, 440) further comprises a third opening (342, 442),
wherein the third opening (342, 442) is offset further from the first opening (231, 331) in the process direction (P) than the second opening (342, 442),
wherein the third opening (342, 442) is positioned adjacent to the second opening (341, 441), and at least partially overlaps the second opening (341, 441) in the lateral direction (L).

6. Electrode manufacturing method comprising the following steps:
(a) providing an web-type electrode substrate (1) defining a web width extending in a lateral direction (L);
(b) moving the web-type electrode substrate (1) in a process direction (P) perpendicular to the web width direction;
(c) depositing an amount of a first battery material onto a first surface area on a first side of the web-type electrode substrate (1) to form a first deposition portion (5);
(d) depositing an additional amount of the first battery material onto a second surface area on the first side of the web-type electrode substrate (1) offset with respect to the first surface area in the lateral direction (L) to form a second deposition portion directly on the web-type electrode substrate (1) laterally adjacent to the first surface area and to form a cover deposition portion (6) in the first surface area extending at least partially over the first deposition portion (5).

7. The electrode manufacturing method according to claim 6, wherein the second surface area has a width in the lateral direction (L) equal to or smaller than 10% of the first surface area.

8. The electrode manufacturing method according to claim 6 or 7,
wherein the second deposition portion is equal to or larger than 50% of the cover deposition portion (6).

9. The electrode manufacturing method according to one of the claims 6 to 8 further comprising:
(e) depositing, additionally, a second battery material onto a third surface area on the first side of the web-type electrode substrate (1) laterally adjacent to the second surface area opposite to the first surface area, such that the second battery material is at least partially deposited directly onto the web-type electrode substrate (1) and at least partially over the second surface area.

10. The electrode manufacturing method according to claim 9,
wherein the second battery material differs from the first battery material.

11. An electrode manufactured using the method according to one of the claims 6 to 10, the electrode comprising:
an electrode substrate; and
a battery material deposition comprising a battery material formed on the electrode substrate,
wherein the battery material deposition comprises a contact surface in contact with the electrode substrate and a top surface opposite the contact surface,
wherein the battery material layer comprises a sloping edge portion on at least one lateral edge of the deposition which slopes down from the top surface to the electrode substrate defining a slope width (s) extending in the lateral direction (L),
wherein the slope width (s) is equal to or smaller than 1% of a width of the battery material deposition.

12. The electrode according to claim 11 further comprising:
a second material deposition comprising a dielectric material,
wherein the second material layer is formed on the electrode substrate and the lateral edge.

13. The electrode according to claim 11,
wherein the second material layer at least partially covers the top surface of the battery material deposition.

14. A battery comprising at least one electrode according to one of the claims 11 to 13.
